# EUROPÄISCHE PATENTANMELDUNG

(11) **EP 1 714 590 A1**
(43) Veröffentlichungstag der Anmeldung: **25.10.2006**
(21) Anmeldenummer: 06008079.3
(22) Anmeldetag: 19.04.2006
(51) Int. Cl.: A47D 13/02, A45F 3/14, B60N 2/28

(54) **Tragvorrichtung für Babys in Babyschalen**

(30) Priorität: 19.04.2005 CH 6962005
(71) Anmelder: Dünser, Thomas Georg, Dr., 9494 Schaan (LI)
(72) Erfinder: Dünser, Thomas Georg, Dr., 9494 Schaan (LI)

(57) **Zusammenfassung**

Die Erfindung betrifft eine Vorrichtung 9 zum ergonomischen und sicheren Tragen und Halten von Babys und Kleinkindern in Babyschalen 8.

## Beschreibung

Die Erfindung betrifft eine Vorrichtung zum Halten und Tragen von Babys in handelsüblichen Sicherheitsautositzen, resp. Tragschalen für Babys - im Folgenden "Babyschalen" genannt - gemäss dem kennzeichnenden Teil des unabhängigen Anspruchs.

Für die Beförderung neugeborener Babys in Personenkraftwagen ist die Benutzung einer handelsüblichen, sicherheitsgeprüften Babyschale in vielen Ländern Pflicht. Einmal im Gebrauch, wird die Babyschale schnell auch ausserhalb des Autos ein ständiger Begleiter von Baby und Eltern: Zumeist erlaubt ein Tragebügel an der Schale den Eltern jederzeit einen sicheren Transport des Babys, sei es ausserhalb des Heimes, sei es auch nur von Raum zu Raum. Das Baby kann in der Schale gewiegt werden und auch schlafen. Die eigentlich als Sicherheitsautositz gedachte Schale findet also universale Anwendung, weil sie Babys Kopf und Rücken jederzeit gut stützt und das Baby somit - auch für ungeübte Hände oder längere Distanzen - transportabel macht. Ausserdem erlaubt sie, ein schlafendes Baby von einem Ort zum anderen zu transportieren, ohne dass es erwacht. Es kann am Ziel weiterschlafen, auch wenn das Ziel gerade nicht das Zuhause ist. Neuere Modelle einer solchen Babyschale sind als Weiterentwicklung dieser Erfahrungen auf ein Kinderwagengestell aufsteckbar gestaltet.

Um dem Baby in seinem ersten Lebensjahr bis zu einem Körpergewicht von mehr als 10 kg bei einem Autounfall Aufprallschutz von allen Seiten zu gewähren, muss eine solche Babyschale nicht nur eine gewisse Steifigkeit, sondern auch eine angemessene Grösse (Länge und Breite) aufweisen. Diese Dimensionen machen sie für die Eltern, v. a. für kleine oder von der Geburt noch geschwächte Mütter, ausgesprochen unkomfortabel zu tragen. Durch die seitliche Ausdehnung muss die tragende Person die Schale relativ weit vom Körper entfernt tragen, d.h. Arm, Schulter und Rücken werden durch die ungewohnte Haltung enorm belastet. Ausserdem besteht durch das gezwungenermassen vom Körper distanzierte Tragen die Gefahr, die Schale unabsichtlich in Reib- oder Stosskontakt zu anderen Flächen zu bringen, d. h. die Schale an die eigenen oder fremde Beine zu schlagen, gegen Wände, Türen, Möbel, Autos u. a. zu stossen. Ein Kind über grössere Distanzen oder gar über mehrere Stockwerke mit einer solchen handelsüblichen Schale zu tragen, stellt eine sehr grosse Belastung dar, selbst kurze Strecken sind für viele Eltern und Grosseltern mühsam.

Im Stand der Technik gibt es für die beschriebene Problematik v. a. in den USA ein paar Lösungsansätze aus den 1990er Jahren, von denen jedoch keiner eine akzeptable, resp. praktikable und ― soweit bekannt ― kommerzialisierte Lösung enthält.

Die US 5,267,680 und die US 5,540,365 offenbaren beide eine Tragevorrichtung für Babyschalen mit einem "unitary shoulder strap", d.h. die Gewichtskraft der Babyschale greift wiederum an einem einzigen Punkt am Körper an. Zwar wird der Arm entlastet, doch bleibt die asymmetrische Beanspruchung des Körpers und dadurch auch die Reib- und Stossbelastung der Beine. In beiden Fällen ist ein ergonomisches und gut kontrolliertes Tragen unmöglich.

Die der US 2004/0195283 A1, die nicht nur aufgrund ihrer zeitlichen Nähe als nächster Stand der Technik gelten soll, sondern insbesondere wegen der Gedanken zur Ergonomie, zeigt eine Tragevorrichtung für Babyschalen, mit der zwar die Babyschale an sich ergonomisch getragen werden kann ― jedoch nur leer! Offenbart wird eine Vorrichtung mit zwei Gurten, die es ermöglichen, einen leeren Autositz auf dem Rücken zu tragen, so dass die Hände frei bleiben. Ein Baby in einer Schale auf solche Weise zu transportieren, wäre nicht nur fahrlässig, da es dem Blickfeld des Tragenden entzogen ist, es wäre auch für den Rücken der tragenden Person eine unzumutbare Belastung. Bereits das Schultern des Sitzes mit Kind würde sich vermutlich als nicht machbar herausstellen. Diese Vorrichtung ist denn auch v.a. für den Transport des leeren Autositzes zwischen Flugzeug und Auto gedacht.

So liegt der vorliegenden Erfindung die Aufgabe zugrunde, eine Vorrichtung bereitzustellen, die einer Person ermöglicht, ohne fremde Hilfe und unabhängig von ihrer Körpergrösse und Konstitution ein Baby in einer Babyschale ergonomisch und sicher zu tragen.

Die Aufgabe wird durch eine Vorrichtung gemäss dem kennzeichnenden Teil des unabhängigen Anspruchs gelöst. Die abhängigen Ansprüche definieren bevorzugte Ausgestaltungen der erfindungsgemässen Vorrichtung.

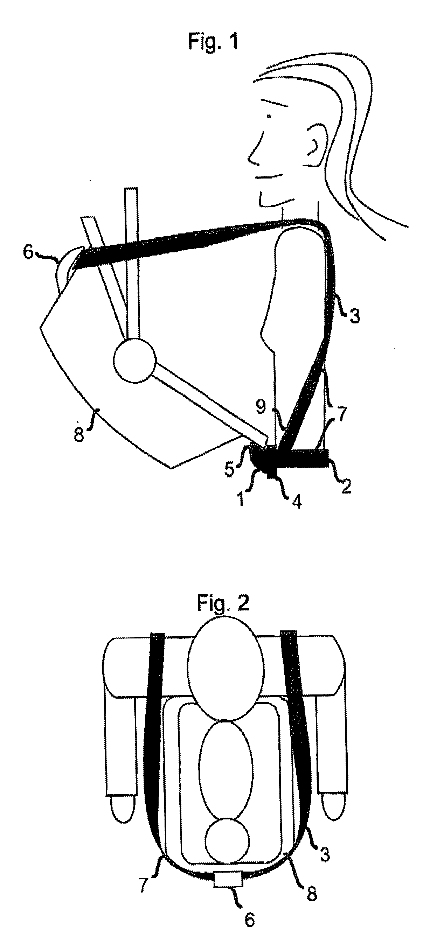

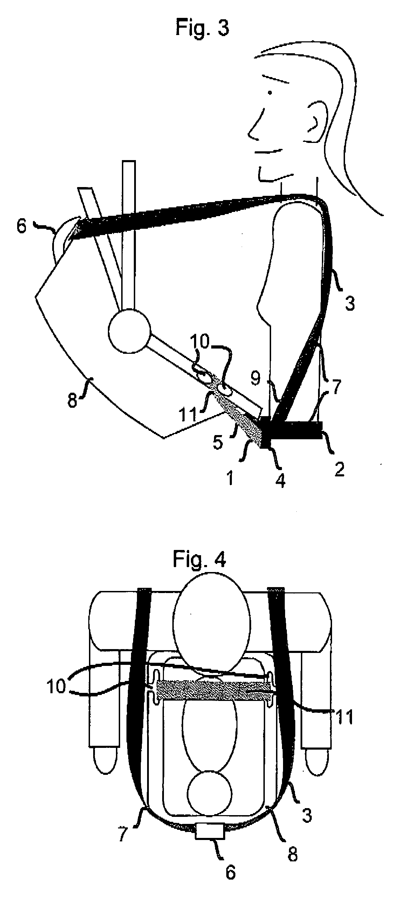

Die Erfindung wird im Folgenden durch die Fig. 1 bis 4 näher beschrieben. Figur 1 zeigt die Vorrichtung in einer bevorzugten Ausführung, bestehend aus einem Halteaggregat 1, einem Hüftgurt 2 und einem Schultergurt 3, der über beide Schultern geführt wird. Es ist ebenso denkbar, dass Hüftgurt 2 und Schultergurt 3 als ein durchgehender Gurt 7 gefertigt sind. Als Gurte werden in diesem Zusammenhang Vorrichtungen bezeichnet, die Zugkräfte übertragen können, seitlich (bezüglich der Längsachse) flexibel sind und eine gewisse Breite aufweisen, damit die Stütz- und Umlenkkräfte auf eine Fläche verteilt und so die Anpressdrücke an den Körper möglichst klein gehalten werden können.
Das Halteaggregat 1 besteht aus einer geraden oder gekrümmten Auflagefläche 4 für die Hüfte der tragenden Person, die vorzugsweise gepolstert ist, und einer damit verbundenen Vorrichtung 5, mit der das Fussende der Babyschale 8 verbunden werden kann. In der bevorzugten Ausführung ist diese Verbindung formschlüssig, so dass die Babyschale 8 mitsamt Baby durch ihre eigene Gewichtskraft in der vertikalen Richtung gehalten und durch die angepasste Form der Vorrichtung 5 an einer horizontalen Verschiebung gehindert wird. Die Babyschale 8 kann zusätzlich durch ein weiteres Verbindungselement 11 (z. B. Gurt bzw. Seil) am Halteaggregat 1 fixiert werden, wie die Figuren 3 und 4 zeigen. Vorzugsweise werden dafür die meist an den handelsüblichen Babyschalen 8 vorhandenen Autogurtführungselemente 10 verwendet. Das Halteaggregat 1 wird über den Hüftgurt 2 an der Hüfte der tragenden Person befestigt, wobei die Länge des Hüftgurts 2 an den Hüftumfang der tragenden Person angepasst werden kann. Der Hüftgurt 2 besteht vorzugsweise aus zwei Teilen, die mit einer handelsüblichen Verschlussvorrichtung miteinander verbunden werden können.

Der Schultergurt 3 ist entweder am Halteaggregat 1 oder am Hüftgurt 2 fest und / oder lösbar befestigt. Wird nur ein Gurt 7 verwendet, wird er ebenfalls am Halteaggregat 1 fest und / oder lösbar befestigt. Wird der Schultergurt 3 oder 7 über den Rücken und über beide Schultern gelegt, bildet sich vor dem Körper der tragenden Person eine Schlaufe (siehe Figur 2 oder 4), die so um das Kopfende der Babyschale 8 gelegt wird, dass der Schultergurt 3 oder 7 ungefähr an den für den Haltegurt des Autositzes vorbestimmten Stellen der Babyschale 8 liegt (siehe Figur 1 oder 3). Dies hat den Vorteil, dass für die erfindungsgemässe Tragevorrichtung 9 der Babyschale 8 keine Änderungen an derselben vorgenommen werden muss, so dass die Stabilität und Sicherheit der Befestigung des Schultergurts 3 den Sicherheitsstandards von Kinderautositzen entspricht. Die beiden über die Schulter führenden Teile des Schultergurts 3 können miteinander verbunden sein, um zu verhindern, dass die Träger seitlich von den Schultern rutschen. Der Schultergurt 3 ist, ebenso wie der Hüftgurt 2, in der Länge variabel gestaltet, damit er auf die Grössenverhältnisse der tragenden Person einstellbar ist. Beide Gurte 2 und 3 können für zusätzlichen Tragekomfort gepolstert sein.

Es ist durchaus auch denkbar, eine Babyschale direkt auf den Gebrauch mit einer solchen Tragevorrichtung hin zu konzipieren. Hier liesse sich neben diversen Möglichkeiten der lösbaren Verbindung von Babyschale und Tragevorrichtung auch eine fixe Verbindung vorstellen. Die Tragevorrichtung könnte direkt in die Babyschale integriert sein. Ebenso kann mindestens ein ― vorzugsweise verstellbarer ― Gurt an der Babyschale befestigt sein.

Die Umgestaltungsmöglichkeiten sind vielfältig und liegen im Know How des Fachmannes. Daher soll die Beschreibung keinesfalls als abschliessend, sondern als beispielhaft verstanden werden.

Für die Benutzung der erfindungsgemässen Vorrichtung 9 wird ― so die Verbindung zwischen Tragevorrichtung und Babyschale lösbar ist ― vorzugsweise das folgende Verfahren angewendet: Die tragende Person legt sich den Hüftgurt 2 mitsamt Halteaggregat 1 um die Hüfte und schliesst die beiden Teile des Hüftgurts 2 durch die Verschlussvorrichtung. Zuvor ist der Hüftgurt 2 auf den Hüftumfang der tragenden Person mindestens grob eingestellt worden. Der Hüftgurt 2 kann auch in verbundenem Zustand in der Länge angepasst werden. Der Schultergurt 3 wird anschliessend ebenfalls der Körpergrösse angepasst und über beide Schultern gelegt, so dass die Schlaufe des Schultergurts 3 vor dem Oberkörper zu liegen kommt. Die Babyschale 8 mitsamt Kind wird nun mit beiden Händen in der Mitte gefasst und auf die Vorrichtung 5 des Halteaggregats 1 so gelegt, dass die bereits vorhandene Mulde am Fussende der Babyschale 8 mit der Vorrichtung 5 eine formschlüssige Verbindung eingeht. Das Gewicht der Babyschale 8 und des Kindes wird jetzt von den Hüften der tragenden Person gehalten. Weil dadurch die Belastung der Arme deutlich kleiner ist, kann die Babyschale 8 mit nur einer Hand gehalten werden, um zu verhindern, dass die Babyschale 8 nach vorne kippt. Die freie Hand legt die Schlaufe des Schultergurts 3 um das Kopfende der Babyschale 8 und positioniert sie in der Haltevorrichtung 6 für den Autogurt. Die Länge des Schultergurts 3 kann schliesslich, soweit erforderlich, weiter angepasst werden. Die Babyschale 8 wird jetzt in einer sicheren und für die tragende Person ergonomischen Position gehalten und lässt die Hände frei für andere Tätigkeiten (z. B. Türöffnen).

Die erfindungsgemässe Vorrichtung 9 und das Verfahren zur Benutzung derselben erlauben auch einer schwachen und kleinen Person, das Gewicht der Babyschale 8 und des Babys ohne Hilfe von Drittpersonen sicher und ergonomisch in die Trageposition zu bringen und auch über längere Distanzen zu tragen. Das Baby wird dabei bevorzugt auf der Vorderseite der tragenden Person befestigt, da so zum einen das Hochheben und Befestigen der Babyschale 8 ergonomisch geschehen kann und zum anderen das Baby direkt im Blickfeld der tragenden Person ist. So kann sie jederzeit auf das Baby reagieren, muss die Trage nicht einmal abstellen, um ihm etwas zu geben oder es zu berühren ― und das Baby kann das Gesicht der tragenden Person erkennen. Ein weiterer Vorteil der bevorzugten Ausführung ist, dass der Schultergurt 3 die Brust nicht berührt und so ― v. a, bei stillenden Müttern - keine Gefahr von schmerzhaften Scheuerstellen besteht.

### Bezugszahlenverzeichnis:

(1) Gesamtes Halteaggregat für die Befestigung der Babyschale 8
(2) Hüftgurt zur Befestigung des Halteaggregats 1 an der Hüfte der tragenden Person
(3) Schultergurt zur Befestigung des Kopfendes der Babyschale 8 an der tragenden Person.
(4) Auflagefläche des Halteaggregats 1 für die komfortable Lasteinleitung auf die Hüfte der tragenden Person.
(5) Vorrichtung zur Befestigung der Babyschale 8.
(6) Haltevorrichtung des Kinderautositzes für die Befestigung des Autogurtes während der Autofahrt, die gemäss dieser Erfindung für die Befestigung des Schultergurts 3 oder 7 verwendet wird.
(7) Durchgehender Gurt als Alternative zu zwei getrennten Gurten 2 und 3.
(8) Babyschale
(9) Gesamte erfindungsgemässe Halte- und Tragvorrichtung.
(10) An der Babyschale meist vorhandenes, vorderes Autogurtführungselement
(11) Sicherungsgurt

## Patentansprüche

1. Vorrichtung (9) zum Halten und Tragen von Babys in Babyschalen (8),
**dadurch gekennzeichnet, dass** sie erlaubt, dass die Gewichtskraft einer Babyschale (8) in Verbindung mit derjenigen eines darin befindlichen Babys, sowie die daraus resultierenden Kräfte symmetrisch auf den Körper der tragenden Person wirken.

2. Vorrichtung (9) nach Anspruch 1,
**dadurch gekennzeichnet, dass** sie das Gewicht der Babyschale (8) auf beide Schultern, Rücken und Hüfte einer tragenden Person verteilt.

3. Vorrichtung (9) nach Anspruch 1 oder 2
**dadurch gekennzeichnet, dass** sie mindestens einen Gurt (7) zur Verteilung der Gewichtskraft der Babyschale (8) und des Babys sowie der daraus resultierenden Kräfte aufweist.

4. Vorrichtung (9) nach einem der vorangehenden Ansprüche,
**dadurch gekennzeichnet, dass** der Gurt (7) oder die Gurte (2) und (3) verstellbar ist/sind.

5. Vorrichtung (9) nach einem der vorangehenden Ansprüche,
**dadurch gekennzeichnet, dass** die Babyschale (8) ohne Manipulation derselben von mindestens einer Gurtschlaufe (3) aufgenommen wird.

6. Vorrichtung (9) nach einem der vorangehenden Ansprüche,
**dadurch gekennzeichnet, dass** sie ein weiteres Aggregat (1) zur Aufnahme der Babyschale (8) aufweist.

7. Vorrichtung (9) nach Anspruch 6,
**dadurch gekennzeichnet, dass** das Aggregat (1) zum Gebrauch fest, aber lösbar, vorzugsweise formschlüssig, mit der Babyschale (8) verbunden wird.

8. Vorrichtung (9) nach einem der Ansprüche 1-7,
**dadurch gekennzeichnet, dass** das Aggregat (1) und/oder mindestens ein Gurt (2, 3, 7) fest mit der Babyschale verbunden ist/sind.

9. Vorrichtung (9) nach einem der vorangegangenen Ansprüche,
**dadurch gekennzeichnet, dass** der Gurt (7) oder die Gurte (2) und (3) mit dem Aggregat (1) fest und / oder lösbar verbunden ist/sind.

10. Verfahren zur Benutzung der Vorrichtung (9) nach einem der Ansprüche 1-7 oder 9,
**dadurch gekennzeichnet, dass** zuerst das Halteaggregat (1) mit dem Hüftgurt (2) oder dem Gurt (7) an der tragenden Person befestigt wird, anschliessend die Babyschale (8) mit dem Halteaggregat (1) verbunden und darauf gehalten wird und schliesslich der Schultergurt (3) oder der Gurt (7) durch die Haltevorrichtung (6) der Babyschale (8) gelegt und damit die Vorrichtung abschliessend fixiert wird.
